# EUROPEAN PATENT SPECIFICATION

(11) **EP 2 324 718 B1**
(45) Date of publication and mention of the grant of the patent: **21.03.2012**
(21) Application number: 09176301.1
(22) Date of filing: 18.11.2009
(51) Int. Cl.: A23F 3/34

(54) **Health tea and method for preparing the same**
Gesundheitstee und Verfahren für seine Zubereitung
Thé bon pour la santé et son procédé de préparation

(43) Date of publication of application: 25.05.2011
(73) Proprietor: Jang, Young-Sam, Mapo-Ku Seoul 121-210 (KR)
(72) Inventor: Jang, Young-Sam, Mapo-Ku Seoul 121-210 (KR)
(74) Representative: ABG Patentes, S.L.

(56) References cited:
- EP-A1- 1 997 500
- US-A1- 2004 180 104
- DATABASE WPI Week 200351 Thomson Scientific, London, GB; AN 2003-538176 XP002579567 & KR 2003 026 939 A (CHOI M H) 3 April 2003 (2003-04-03)
- DATABASE WPI Week 200960 Thomson Scientific, London, GB; AN 2009-K33815 XP002579559 & KR 100 826 900 B1 (DONGYANG BS CO LTD) 6 May 2008 (2008-05-06)
- DATABASE WPI Week 200943 Thomson Scientific, London, GB; AN 2009-K32002 XP002579564 & KR 2009 056 098 A (KIM Y) 3 June 2009 (2009-06-03)

## Description

### BACKGROUND OF THE INVENTION

### 1. Field of the Invention

The present invention relates to natural health and wellness teas and a preparation method thereof, more particularly, to a health tea prepared using a variety of natural materials, which is beneficial to the human body and has advantageous effects of the materials preferably contained in the health tea, as well as a method for preparing the same.

### 2. Description of the Related Art

In this busy and difficult era, modern people who are mostly living in complicated downtown departing from nature, substantially lack basic physical activities and are always suffering from chronic fatigue and tired due to excessive stress and lack of exercise.

In such circumstances, natural healthy teas have been developed in order to conveniently enhance health care for people at anytime from anywhere at a low price. In fact, it goes without saying that health is one of the most important things in human life.

Specifically, inorganic or organic harmful materials and/or toxic chemicals produced or exhausted from factories during industrial manufacturing processes cause environmental pollution and threaten natural environments and the survival of various animal species including human beings, and in turn, are gradually destroying the harmony of natural ecosystems.

Especially, there is a significant problem that waste water leakage generated by landfill of domestic waste causes heavy metal and/or hazardous material-based contamination of groundwater around the landfill. If a person drinks such contaminated groundwater, toxic ingredients usually accumulate in the body and cause various adult diseases and, ultimately, result in fatal damage to the body.

Although modern people mostly take lots of fatty foods, especially, meat, and suffer from adult diseases such as hypertension, diabetes, obesity, etc., there is still proposed no potent drinks with specific efficacy on such adult diseases.

The human body comprises about 70% of water and water is necessary for proper body operation and/or physical activity. Therefore, research studies on drinking water and other beverages such as various teas are currently conducted in association with environmental pollution.

According to recent development trends of drinking products, modern people show great interest in different types of drinking products rather than traditionally known simple favorite beverages, thereby reflecting much concern for health.

There are many studies that improve or enhance performance of drinking products through pharmacological effects of herbal drug plants, and such drinking products are preferably prepared by adding herbal drug ingredients to any specific favorite beverages. As a result, some of the products with specific pharmacological efficacy have developed and are now commercially available in the market.

As herbal teas containing Korean medical plants as primary ingredients, ginseng tea, Lycium Chinese fruit tea, Acanthopanax sessiliflorus root bark extract tea, Cassia tora seed extract tea and so on are traditionally known and other types of teas are being newly and continuously developed.

However, the above traditional herbal teas normally comprise single ingredient based herbal plants as principal ingredients. The herbal teas containing specific herbal plants are partially used for drinking purposes of consumers since the herbal plants have originally known pharmacological properties and are expected to exhibit these pharmacological properties in the teas. But, the herbal teas lack widespread appeal due to inferior taste or flavor compared to coffee, black tea and/or green tea. Also, there are few consumers convinced that the herbal plants contained in the teas really exhibit original pharmacological properties thereof. European patent application EP 1 997 500 discloses health teas and a method for their preparation; said health teas comprising a variety of natural materials such as herbal plants.

Since the herbal teas also generally have a strong bitter taste, a lack of preference and require high price, there is a difficulty in habitually drinking or having the herbal teas, which are different from commercially available drinking products or teas.

### SUMMARY OF THE INVENTION

The present invention is directed to solving the above conventional problems known in related arts, and an object of the present invention is to provide a natural health tea prepared from different natural substances with various advantages in that the tea is effective to improve stamina, endurance and/or concentration, is prepared at economically feasible costs based on natural materials and the used materials are individually placed in a small bag in view of efficacy thereof, and then, heated to extract active ingredients therefrom; and, a method for preparing the same.

In order to accomplish the foregoing object, there is provided a method for preparing a health tea according to an aspect the present invention, comprising: preparing 4 to 6 wt.parts of Acanthopanax sessiliflorum, 2 to 4 wt. parts of Cervi cornu, 4 to 6 wt. parts of garlic, 4 to 6 wt. parts of Cassia tora L., 2 to 4 wt. parts of Rehmannia glutinosa, 2 to 4 wt. parts of Cornus officinalis, 1 to 2 wt. parts of Ganoderma lucidum, 2 to 4 wt. parts of Schizandra chinensis Baill, 6 to 8 wt. parts of Zizyphus jujuba var, 2 to 4 wt. parts of Chinese yam, 5 to 7 wt. parts of pear, 4 to 6 wt. parts of onion, 9 to 11 wt. parts of brown sugar, and the balance being water; placing some of the prepared materials, that is, Acanthopanax sessiliflorum, Cervi cornu, garlic, Cassia tora L., Rehmannia glutinosa, Cornus officinalis, Ganoderma lucidum, Schizandra chinensis Baill, Zizyphus jujuba var and Chinese yam in water, followed by heating the same at 100 to 150°C for 6 to 12 hours to obtain an extract thereof; and adding the remaining materials, that is, the prepared pear, onion and brown sugar to the extract.

Preferably, the Acanthopanax sessiliflorum, Cervi cornu, garlic and Cassia tora L. are placed in a first bag, Rehmannia glutinosa, Cornus officinalis and Ganoderma lucidum are placed in a second bag, and Schizandra chinensis Baill, Zizyphus jujuba var and Chinese yam are placed in a third bag; each of the bags is immersed in water for heating and extracting; and the remaining materials including pear, onion and brown sugar are placed in a fourth bag and added to the solution.

According to another aspect of the present invention, there is provided a health tea prepared by the above method for preparing a health tea.

As described above, a natural health tea prepared using various natural materials according to the present invention may efficiently improve stamina, endurance and/or concentration of a human being and may favorably enable stress relief and refreshment.

Moreover, the inventive natural health tea prepared using a variety of natural materials may be produced at economically feasible costs.

In addition, since the used materials are individually placed in a small bag for heating in terms of efficacy, active ingredients are effectively extracted from each of the materials.

### BRIEF DESCRIPTION OF THE DRAWINGS

The above object and other objects, features, aspects, and advantages of the present invention will be more fully described in the following detailed description of examples, taken in conjunction with the accompanying drawings. In the drawings:
FIG. 1 is a schematic view illustrating a process for preparation of a natural health tea according to an exemplary embodiment of the present invention; and
FIG. 2 is a block diagram illustrating a process for preparation of a natural health tea according to an exemplary embodiment of the present invention.

### DETAILED DESCRIPTION OF THE INVENTION

Hereinafter, preferred embodiments of the present invention will be described in more detail by the following examples with reference to the accompanying drawings.

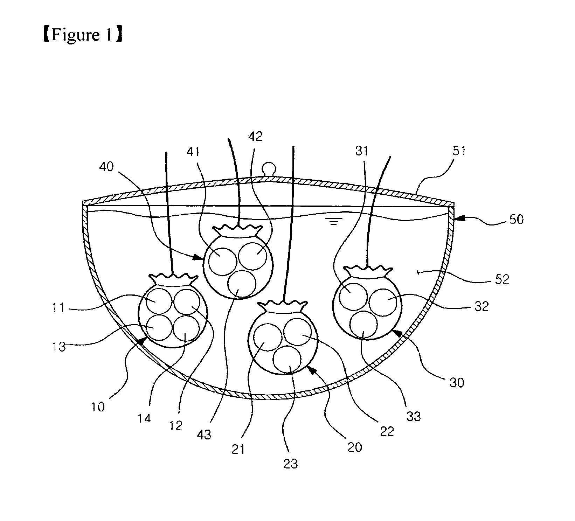

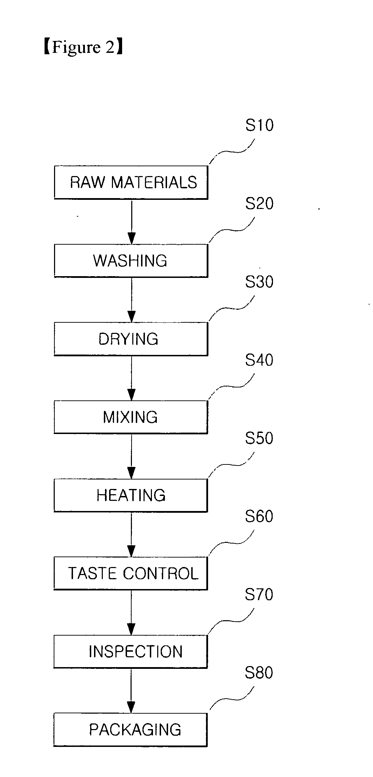

FIG. 1 is a schematic view illustrating a process for preparation of a natural health tea according to an exemplary embodiment of the present invention, and FIG. 2 is a block diagram illustrating a process for preparation of a natural health tea according to an exemplary embodiment of the present invention.

As illustrated in FIGS 1 and 2, a natural health tea according to an exemplary embodiment of the present invention is prepared using plural natural materials, more particularly, Acanthopanax sessiliflorum, Cervi cornu, garlic, Cassia tora L., Rehmannia glutinosa, Cornus officinalis, Ganoderma lucidum, Schizandra chinensis Baill, Zizyphus jujuba var and Chinese yam, pear, onion, brown sugar, and water through heat extraction.

Among the foregoing materials, Acanthopànax sessiliflorum is a plant preferably having five branched leaves, so-called "ogapi (five leaves on one branch are favorable)," which is bitter and warm, and has a unique odor.

This plant has a crown or semi-crown shape which is smooth and colored in brown or dark gray at an outer side while sparsely having thorns and/or thorn marks. A relatively younger branch exhibits white gray spots on the skin thereof. Inner side of the plant is yellow white and fibrous, particularly, composed of hard-to cut fibers.

Acanthopanax sessiliflorum assists functions of the liver and kidneys while reinforcing tendons and bones, enabling fatigue relief, nerve tonic effects and/or recuperation, etc. Physiological efficacies thereof may include, for example, immunity enhancement, antioxidant effect, anti-fatigue, thermal resistance, stimulus resistance, endocrine function control, blood pressure control, radiation protection, detoxification, and the like.

Acanthopanax sessiliflorum used for health tea is prepared by scalding leaves and root barks of the plant slightly in boiling water and then drying the same in the shade. When an amount of this plant is less than 4 wt. parts to the total weight of the health tea, medical efficacy thereof is very low. On the other hand, using the same with an amount of more than 6 wt. parts, it becomes considerably spicy. Therefore, the content of Acanthopanax sessiliflorum preferably ranges from 4 to 6 wt. parts to the total weight of the health tea.

Cervi cornu is resulted from complete development of Cervi Parvum cornu which in turn leads to ossification, therefore, does not have blood and is a little heavy and promotes a more rigid bone. Compared to Cervi Parvum cornu, Cervi cornu has a considerably reduced medical efficacy and is usually used to supplement Cervi Parvum cornu, to support health care of children and elderly, and/or as a traditional medicine to promote blood circulation and to remove extravasated blood (or blood coagulation).

In particular, this material refreshes and clears a thick head, has beneficial effects upon amnesia, anemia and a weak person, however, is prohibited for use in a person with hypertension or who has a lot of heat in body. Cervi cornu is salty, warm and non-toxic, has a high content of calcium preferable to reinforce bones.

Cervi cornu used in the inventive health tea is prepared by washing it with water, then drying and cutting the same into a desired size. When an amount of this substance is less than 2 wt. parts to the total weight of the health tea, medical efficacy thereof is very little. On the other hand, using the same with an amount of more than 4 wt. parts, it may cause a chemical burden to the body. Therefore, the content of Cervi cornu preferably ranges from 2 to 4 wt. parts to the total weight of the health tea.

Garlic has beneficial features such as renal denervation, anti-microbial and disinfectant effects, tonic effect, etc., promotes gastric secretion, and stimulates a nervous system to activate blood circulation. Garlic also has other various effects such as retaining of body heat, detoxification, anti-parasitic and/or diuretic effects, mental stabilization, blood pressure control, medical effects on neuralgia or nerve palsy, and the like. For insomnia caused by body weakness or low body temperature, a garlic wine as well as garlic are preferably used to increase body temperature and enable mental stabilization.

Fresh garlic is sufficiently spicy to promote dietary behaviors, enhance appetite and to assist prevention and treatment of constipation. However, a high intake of fresh garlic stimulates gastric mucosa and may optionally cause stomach pain.

Garlic used in the inventive health tea is prepared by peeling and washing the same with water. When an amount of the garlic is less than 4 wt. parts to the total weight of the health tea, its effects are very little. On the other hand, using the same with an amount of more than 6 wt. parts, it may cause a chemical burden to the body. Therefore, the content of garlic preferably ranges from 4 to 6 wt. parts to the total weight of the health tea.

Cassia tora L. is a seed of Cassia tora L. herbage growing well on sunny hills or fields, improves eye health which in turn is effective in preventing pseudomyopia and nyctalopia, lowering blood pressure, and treating dizziness, chronic constipation and/or elder's constipation. Moreover, Cassia tora L. may protect the liver and kidneys and reduce edema.

Cassia tora L. used in the inventive health tea is prepared by selecting fresh Cassia tora L., washing and drying the same, and roasting the dried seeds. When an amount of Cassia tora L. is less than 4 wt. parts to the total weight of the health tea, medical efficacy thereof is very little. On the other hand, using the same with an amount of more than 6 wt. parts, it is increasingly bitter. Therefore, the content of Cassia toral L. preferably ranges from 4 to 6 wt. parts to the total weight of the health tea.

Rehmannia glutinosa is a perennial herb belonging to Scrophulariaceae and a root thereof is used as a medical herb of health tea in oriental medical therapy. This plant is sweet but a little bitter, and is warm to supplement physical energy and vitality which in turn treats chilled waist and/or knee joints or pain thereof, abnormal uterine bleeding, dizziness, and so forth. Moreover, this plant may promote a growth of black hair and reinforce bones.

When an amount of Rehmannia glutinosa is less than 2 wt. parts to the total weight of the health tea, medical efficacy thereof is very little. On the other hand, using the same with an amount of more than 4 wt. parts, side effects such as dyspepsia may occur. Therefore, the content of Rehmannia glutinosa preferably ranges from 2 to 4 wt. parts to the total weight of the health tea.

Cornus officinalis is a fruit of Cornelian cherry tree as a deciduous tree belonging to Cornaceae, which blooms yellow flowers during March to April before leaves then ripen and produce red fruit in a long and round shape in October. Cornus officinalis fruits are a little sweet but very sour and have puckery taste and are harvested after the middle of October. Flesh and seeds of the fruits are divided from each other and the flesh is employed to produce wine, tea and/or oriental medicines.

Cornus officinalis fruit comprises glycosides such as cornin, morroniside, loganin, tannin, saponin, etc., organic acids such as tartaric acid, malic acid, etc., vitamin A and a great content of sugar ingredient. Therefore, this fruit improves blood circulation which in turn enhances sexual function, increases semen and/or bone marrow, and the like.

Cornus officinalis is prepared by gathering fruits, washing and drying the fruits for one week under the sun, removing seeds from the dried fruits, and completely drying again the flesh under sun.

When an amount of Cornus officinalis is less than 2 wt. parts to the total weight of the health tea, medical efficacy thereof is very little. On the other hand, using the same with an amount of more than 4 wt. parts, it tastes very sour. Therefore, the content of Cornus officinalisa preferably ranges from 2 to 4 wt. parts to the total weight of the health tea.

Ganoderma lucidum is generated from roots of deciduous tree species and sprouted from the ground, in the form of a one-year old mushroom having a pileus and a stipe with surface gloss like being treated with an oriental lacquer. This mushroom comprises ergosterol, organic acid, polysaccharide, mannitol, methine, amino acid, benzoic acid, etc.

Ganoderma lucidum improves body vitality, reinforces bone and flesh, activates blood circulation and helps clear mental clutter. In addition, the mushroom is effective in treating some diseases such as hypertension, diabetes mellitus, obesity, liver diseases, weakened joint, nervous breakdown, insomnia, difficulty in breathing, eye diseases, and the like. Especially, the mushroom has excellent efficacy in treating hemorrhoids and stomach disease.

Ganoderma lucidum used in the inventive health tea is prepared by clearly washing the mushroom and chopping the same into a diameter size of 2 to 3 cm. When an amount of Ganoderma lucidum is less than 1 wt. part to the total weight of the health tea, medical efficacy thereof is very little. On the other hand, using the same with an amount of more than 2 wt. parts, it may cause adverse effects on a human body. Therefore, the content of Ganoderma lucidum preferably ranges from 1 to 2 wt. parts to the total weight of the health tea.

Schizandra chinensis Baill has five distinct flavors; sweet, sour, salty, bitter, puckery taste and, among those, the sour taste is strong. This fruit comprising schizandrin, gomisin, citric acid, malic acid, citral, and the like reinforces heart functions, controls blood pressure and improves immunity, thus efficiently being used as a tonic agent. In addition, Schizandra chinensis Baill serves to protect bronchial tubes which in turn reinforces pulmonary functions, has anti-tussive and mucolytic effects to preferably treat cough and thirst.

Schizandra chinensis Baill used in the inventive health tea is prepared by drying fruits of Schizandra chinesis trees. When an amount of these fruits is less than 2 wt. parts to the total weight of the health tea, bronchial protection effects are very little. On the other hand, using the same with an amount of more than 4 wt. parts, it may cause a burden to the body due to increased sweating. Therefore, the content of Schizandra chinensis Baill preferably ranges from 2 to 4 wt. parts to the total weight of the health tea.

Zizyphus jujuba var is a fruit of jujube tree in an oval shape, has a reddish-brown surface and a length of 1.5 to 2.5 cm, and becomes sweet after it is ripening to red. Although the fruit can be eaten raw and fresh, it is also fully dried and used in various applications such as confectionary, cooking, medical use, etc.

Especially, since a jujube tea contains a large amount of vitamins A, B1 and B2 as well as carbohydrates, it is effective in treating nervous breakdown, anemia, loss of appetite, debility, etc. and also helps skin care. Therefore, Zizyphus jujuba var is preferably used in medical treatment of appetite loss, insomnia, nervous tension, etc.

Zizyphus jujube var used in the inventive health tea is prepared by selecting well ripened fruits, and completely washing and drying the same. When an amount of these fruits is less than 6 wt. parts to the total weight of the health tea, beneficial features thereof are not sufficiently expressed. On the other hand, using the same with an amount of more than 8 wt. parts, it may cause a burden to the body to a weaken body. Therefore, the content of Zizyphus jujube var preferably ranges from 6 to 8 wt. parts to the total weight of the health tea.

Chinese yam is a flesh root with purplish white color extending deep underground, has triangular leaves in the form of lower part of a heart, petioles and leaf veins of the yam are purplish and flesh roots of the yam are used in food and medical use.

Chinese yam is harvested in autumn and dried to have a uniform or non-uniform cylindrical form, and may be optionally cut in length or width direction. An outer surface of the yam is milky or yellowish white and a cross-sectional face is flat and ivory white, and has a powder or cutin texture. The yam is rigid but easily broken.

Chinese yam supplements vitality of a human being, stabilizes mental conditions, improves memory and reinforces sexual function. However, excessive intake obstructs energy circulation in a body to feel abdominal swelling or cause pain. The yam also exhibits physiological activities such as blood sugar control, anti-ageing effect, and stimulation of bowel movement.

When an amount of the yam is less than 2 wt. parts to the total weight of the health tea, medical efficacy thereof is very little. On the other hand, using the same with an amount of more than 4 wt. parts, it may cause pain. Therefore, the content of Chinese yam preferably ranges from 2 to 4 wt. parts to the total weight of the health tea.

Pear is a fruit of a pear tree and is effective for bronchial protection and treatment of bronchial diseases which in turn cures cold, dry cough, asthma, etc. and, in addition, helps diuretic action and secretion function. This fruit relieves cough, removes sputum, alleviates symptoms related to stomach chill or pain, hoarse throat, etc., and treats abscesses. Moreover, detoxification effect of the pear may be used in curing a hangover.

When an amount of the pear is less than 5 wt. parts to the total weight of the health tea, medical efficacy in bronchial protection is not sufficiently expressed. On the other hand, using the same with an amount of more than 7 wt. parts, it may cause a burden to the body due to increased sweating. Therefore, the content of pear preferably ranges from 5 to 7 wt. parts to the total weight of the health tea.

Onion is a root of a biennial plant belonging to Liliaceae, comprises calcium, iron, vitamins B2 and C, carotene, citric acid, malic acid, etc. Like garlic, the onion assists blood circulation and prevents blood coagulation sufficient to inhibit thrombosis and is also effective in enhancing gastric function and treating hypertension and atherosclerosis.

The onion used in the inventive health tea is prepared by peeling the root, completely washing and cutting the same into a desired size, and drying the cut pieces under the shade. When an amount of the onion is less than 4 wt. parts to the total weight of the health tea, blood circulation control is not sufficiently attained. On the other hand, using the same with an amount of more than 6 wt. parts, flavor of the onion is too strong. Therefore, the content of onion preferably ranges from 4 to 6 wt. parts to the total weight of the health tea.

Brown sugar is added to control sweet taste of a natural health tea according to the present invention. When an amount of the brown sugar is less than 9 wt. parts to the total weight of the health tea, the tea does not have desirable sweet taste. On the other hand, using the same with an amount of more than 11 wt. parts, it may cause dental diseases and/or adult diseases. Therefore, the content of brown sugar preferably ranges from 9 to 11 wt. parts to the total weight of the health tea.

Water is the most abundant and essential substance in a human body, comprising 70% of the body, and must be supplied thereto in a certain amount everyday. Complicated chemical variations generated by a number of materials dissolved in water may be combined together to constitute phenomenon of life in a human being.

The water used in the inventive health tea is clear and purified water such as first grade drinking water, underground water, etc. When an amount of water is too large or too small, drinking feel of the tea and/or efficacy of each ingredient dissolved in the water is deteriorated. The amount of water is preferably the balance to the total weight of the health tea excluding all of the other ingredients.

As illustrated in FIG. 1, the natural health tea according to an exemplary embodiment of the present invention is obtained by the following procedure.

First, individual substances are prepared and separately placed in a first bag 10, a second bag 20, a third bag 30 and a fourth bag 40 in view of medical effects thereof.

Three of the bags, that is, the first, second and third bags (10, 20, 30) are immersed in a vessel 50 containing water 52 and, after putting a lid 51 on the vessel, the vessel is subjected to heat extraction at 100 to 150°C for 6 to 12 hours under pressure. After the extraction is over, the fourth bag 40 is added to the vessel in order to regulate taste of the natural health tea.

In order to prevent alteration of effects of individual materials during heat extraction and addition thereof, Acanthopanax sessiliflorum 11, Cervi cornu 12, garlic 13 and Cassia tora L. 14 are provided in the first bag 10, Rehmannia glutinosa 21, Cornus officinalis 22 and Ganoderma lucidum 23 are placed in the second bag 20, Schizandra chinensis Baill 31, Zizyphus jujuba var 32 and Chinese yam 33 are included in the third bag 30 and, finally, pear 41, onion 42 and brown sugar 43 are added to the fourth bag 40.

Each bag is preferably made of hemp cloth which is a natural fabric to sufficiently infuse (or extract) the foregoing ingredients in water, easily pass water 52 through the fabric while inhibiting loss of individual materials, and prevent modification of ingredients contained in the materials.

In particular, if a temperature of heating the vessel 50 is below 100°C, constitutional ingredients of each raw material are not sufficiently infused. On the other hand, if the temperature exceeds 150°C, functional effects of each ingredient may be modified. Therefore, the temperature preferably ranges from 100 to 150°C.

Also, if a time period of heating the vessel 50 is shorter than 6 hours, constitutional ingredients of each raw material are not sufficiently infused. On the other hand, if the time period is longer than 12 hours, the raw materials are modified or tastes thereof are altered. Therefore, the heating time preferably ranges from 6 to 12 hours.

Referring to FIG. 2, a process of preparing a natural health tea according to an exemplary embodiment of the present invention will be described in detail below.

First, all of raw materials are prepared: 5 wt. parts of Acanthopanax sessiliflorum; 3 wt. parts of Cervi cornu; 5 wt. parts of garlic; 5 wt. parts of Cassia tora L.; 3 wt. parts of Rehmannia glutinosa; 3 wt. parts of Cornus officinalis; 2 wt. parts of Ganoderma lucidum, 3 wt. parts of Schizandra chinensis Baill; 7 wt. parts of Zizyphus jujuba var; 3 wt. parts of Chinese yam; 6 wt. parts of pear; 5 wt. parts of onion; and the balance being water (S10).

Then, the raw materials are washed with water (S20) and dried under the sun or the shade (S30). The prepared materials, that is, Acanthopanax sessiliflorum, Cervi cornu, garlic, Cassia tora L., Rehmannia glutinosa, Cornus officinalis, Ganoderma lucidum, Schizandra chinensis Baill, Zizyphus jujuba var and Chinese yam are separately placed in several bags (S40). Each of the bags containing a mixture of selected materials is placed in a vessel, the balance amount of water is added to the vessel. After closing a lid, the vessel is subjected to heat extraction at 100 to 150°C for 6 to 12 hours (S50).

Afterward, an alternative bag including 6 wt. parts of pear, 5 wt. parts of onion and 2 wt. parts of brown sugar is prepared and immersed into the prepared solution containing heat extracted ingredients in water, so as to control taste of a natural health tea as the resultant product (S60). The obtained final product is subjected to inspection of constitutional ingredients (S70). The health tea which passes the inspection is placed in a sanitary container, packed by a vacuum packaging machine, and delivered or supplied (S80).

Hereinafter, the present invention will be described in greater detail by the following examples. However, these examples are intended for illustrative purposes and a person skilled in the art will appreciate that the present invention is not restricted thereto.

### EXAMPLE 1 (FORMULATION)

A natural health tea prepared by the foregoing procedures is subjected to experiments for constitutional ingredients and quality standards thereof. Results of the experiments are:
(1) Color: reddish brown
(2) Taste: little sweet and smooth feeling in throat
(3) Tar color: not detected
(4) Heavy metal content: less than 2ppm
(5) Retention time: stability of a formulation is guaranteed at least 2 years

### EXAMPLE 2 (CLINICAL TRIAL)

For the natural health tea of the present invention prepared by the foregoing procedure, after intake of the tea by a person in a state of fatigue, functional effects of the tea were investigated and results thereof are described below:

### (1) Intake of tea in a state of extreme fatigue

For 50 adult male people between the age of 30 to 60 listed in TABLE 1, the inventive health tea was tested. More particularly, each person in a state of extreme fatigue took 120ml of tea and effects of the tea were investigated. Results thereof are shown in TABLE 2.

**TABLE 1**

| Age distribution | 30-40 | 41-50 | 51-60 | Sum |
|---|---|---|---|---|
| Number of persons | 15 | 20 | 15 | 50 |

**TABLE 2**

| Fatigue level | Number of persons | Excellent effects | Favorable effects | No effects | Rate of effect |
|---|---|---|---|---|---|
| Extreme fatigue | 30 | 25 | 5 | 0 | 100% |
| Light fatigue | 20 | 15 | 5 | 0 | 100% |
| Sum | 50 | 40 | 10 | 0 | |

In this regard, if the person experienced a clear head and improved vitality of body 30 minutes after intake of tea, it is classified into a case exhibiting excellent effects.

When a person experienced gradually clear head and improved vitality of body after intake of tea, it is classified into a case exhibiting favorable effects.

If a person is continuously in a state of extreme fatigue without relief thereof even after intake of tea, it is classified into a case substantially exhibiting no effects.

### (2) Intake of tea in a state of light fatigue

For 50 adult male people within the age distribution listed in TABLE 1, the inventive health tea was tested. More particularly, each person in a state of light fatigue took 120ml of tea and effects of the tea were investigated. Results thereof are shown in TABLE 3.

**TABLE 3**

| State of fatigue | High relief of fatigue | Moderate Relief of fatigue | No relief effect | Sum | Rate of effect |
|---|---|---|---|---|---|
| Number of persons | 40 | 10 | 0 | 50 | 100% |

As a result, it was found that most people experienced considerable or moderate relief of fatigue and the health tea of the present invention was effective to recover body condition.

As is apparent from the above detailed description, the natural health tea according to the present invention comprises specific medical herbs in desired amounts, for example, Acanthopanax sessiliflorum, Cervi cornu, garlic, Cassia tora L., Rehmannia glutinosa, Cornus officinalis and Ganoderma lucidum, thereby aiding in recovering vitality, reinforcing stamina and endurance, and enhancing concentration; and, in addition, Schizandra chinensis Baill, Zizyphus jujuba var, Chinese yam, pear, onion and brown sugar, thus enhancing concentration and efficiently enabling stress relief.

While the present invention has been described with reference to exemplary embodiments, it will be understood by those skilled in the art that various modifications and variations may be made therein without departing from the scope of the present invention as defined by the appended claims.

## Claims

1. A method for preparing a health tea, comprising;
preparing 4 to 6 wt. parts of Acanthopanax sessiliflorum, 2 to 4 wt. parts of Cervi cornu, 4 to 6 wt. parts of garlic, 4 to 6 wt. parts of Cassia tora L., 2 to 4 wt. parts of Rehmannia glutinosa, 2 to 4 wt. parts of Cornus officinalis, 1 to 2 wt. parts of Ganoderma lucidum, 2 to 4 wt. parts of Schizandra chinensis Baill, 6 to 8 wt. parts of Zizyphus jujuba var, 2 to 4 wt. parts of Chinese yam, 5 to 7 wt. parts of pear, 4 to 6 wt. parts of onion, 9 to 11 wt. parts of brown sugar, and the balance being water;
placing some of the prepared materials, that is, Acanthopanax sessiliflorum, Cervi cornu, garlic, Cassia tora L., Rehmannia glutinosa, Cornus officinalis, Ganoderma lucidum, Schizandra chinensis Baill, Zizyphus jujuba var and Chinese yam in water, followed by heating the same at 100 to 150°C for 6 to 12 hours to obtain an extract thereof; and
adding the remaining materials, that is, the prepared pear, onion and brown sugar to the extract.

2. The method according to claim 1, wherein the Acanthopanax sessiliflorum, Cervi cornu, garlic and Cassia tora L. are placed in a first bag, Rehmannia glutinosa, Cornus officinalis and Ganoderma lucidum are placed in a second bag, and Schizandra chinensis Baill, Zizyphus jujuba var and Chinese yam are placed in a third bag; each of the bags is immersed in water for heating and extracting; and the remaining materials including pear, onion and brown sugar are placed in a fourth bag and added to the solution.

3. A health tea prepared by the preparation method as set forth in claim 1.

4. A health tea according to claim 3 prepared by the preparation method as set forth in claim 2.

## Patentansprüche

1. Verfahren zur Herstellung eines Gesundheitstees, die folgendes umfasst:
Bereitstellen von 4 bis 6 Gewichtsanteilen Acanthopanax sessiliflorum 2 bis 4 Gewichtsanteilen Cervi cornu, 4 bis 6 Gewichtsanteilen Knoblauch, 4 bis 6 Gewichtsanteilen Cassia tora L., 2 bis 4 Gewichtsanteilen Rehmannia glutinosa, 2 bis 4 Gewichtsanteilen Cornus officinalis, 1 bis 2 Gewichtsanteilen Ganoderma lucidum, 2 bis 4 Gewichtsanteilen Schizandra chinensis Baill, 6 bis 8 Gewichtsanteilen Zizyphus jujuba var, 2 bis 4 Gewichtsanteilen Chinesischer Yamswurzel, 5 bis 7 Gewichtsanteilen Birne, 4 bis 6 Gewichtsanteilen Zwiebel, 9 bis 11 Gewichtsanteilen braunen Zuckers und Wasser als restlichem Bestandteil;
Einbringen von einigen der bereitgestellten Materialien, das heißt der Substanzen Acanthopanax sessiliflorum, Cervi cornu, Knoblauch, Cassia tora L., Rehmannia glutinosa , Cornus officinalis, Ganoderma lucidum, Schizandra chinensis Baill, Zizyphus jujuba var und Chinesische Yamswurzel in Wasser, gefolgt von einem Erhitzen desselben auf 100 bis 150 °C für 6 bis 12 Stunden, um einen Extrakt davon zu erhalten, und
Hinzufügen der übrigen Materialien, das heißt der bereitgestellten Birne, Zwiebel und des braunen Zuckers zu dem Extrakt.

2. Verfahren nach Anspruch 1, wobei die Substanzen Acanthopanax sessiliflorum, Cervi cornu, Knoblauch, Cassia tora L. in einen ersten Beutel, Rehmannia glutinosa, Cornus officinalis und Ganoderma lucidum in einen zweiten Beutel sowie Schizandra chinensis Baill, Zizyphus jujuba var und die Chinesische Yamswurzel in einen dritten Beutel gegeben werden; jeder der Beutel zum Erhitzen und Extrahieren in Wasser getaucht wird; und die übrigen Materialien, einschließlich Birne, Zwiebel und brauner Zucker, in einen vierten Beutel gefüllt und der Lösung zugegeben werden.

3. Gesundheitstee, hergestellt nach dem in Anspruch 1 dargelegten Herstellungsverfahren.

4. Gesundheitstee nach Anspruch 3, hergestellt nach dem in Anspruch 2 dargelegten Herstellungsverfahren.

## Revendications

1. Méthode de préparation d'un thé bon pour la santé comprenant :
- la préparation de 4 à 6 parts en poids d'*Acanthopanax sessiliflorum,* 2 à 4 parts en poids de *Cervi cornu,* 4 à 6 parts en poids d'ail, 4 à 6 parts en poids de *Cassia tora L.,* 2 à 4 parts en poids de *Rehmannia glutinosa,* 2 à 4 parts en poids de *Cornus officinalis,* 1 à 2 parts en poids de *Ganoderma lucidum,* 2 à 4 parts en poids de *Schizandra chinensis Baill,* 6 à 8 parts en poids de *Zizyphus jujuba var,* 2 à 4 parts en poids d'igname de Chine, 5 à 7 parts en poids de poire, 4 à 6 parts en poids d'oignon, 9 à 11 parts en poids de sucre brun, le reste étant de l'eau,
- le placement d'une partie des matériaux préparés, c'est-à-dire *Acanthopanax sessiliflorum, Cervi cornu,* l'ail, *Cassia tora L., Rehmannia glutinosa, Cornus officinalis, Ganoderma lucidum, Schizandea chinensis Baill, Zizyphus jujuba var* et l'igname de Chine dans l'eau, puis les chauffer à une température comprise entre 100 et 150°C pendant 6 à 12 heures pour en obtenir un extrait, et
- l'ajout des matériaux restant à l'extrait, c'est-à-dire, la poire, l'oignon et le sucre brun préparés.

2. Méthode selon la revendication 1, **caractérisée en ce *qu'****Acanthopanax sessiliflorum, Cervi cornu,* l'ail et *Cassia tora L.* sont placés dans un premier sachet, *Rehmannia glutinosa, Cornus officinalis* et *Ganoderma lucidum* sont placés dans un deuxième sachet et *Schizandra chinensis Baill, Zizyphus jujuba var* et l'igname de Chine sont placés dans un troisième sachet, chacun des sachets est immergé dans l'eau pour le chauffage et l'extraction, et les matériaux restants comprenant la poire, l'oignon et le sucre brun sont placés dans un quatrième sachet et ajoutés à la solution.

3. Thé bon pour la santé préparé selon la méthode de préparation telle que décrite dans la revendication 1.

4. Thé bon pour la santé selon la revendication 3, préparé selon la méthode de préparation telle que décrite dans la revendication 2.
